# EUROPEAN PATENT APPLICATION

(11) **EP 4 838 570 A1**
(43) Date of publication of application: **11.11.2026**
(21) Application number: 26177304.8
(22) Date of filing: 07.05.2026
(51) Int. Cl.: H01M 4/131, H01M 4/36, H01M 4/525, H01M 4/1391, H01M 4/505

(54) **POSITIVE ELECTRODE ACTIVE MATERIAL, METHOD FOR PREPARING THE SAME AND RECHARGEABLE LITHIUM BATTERIES**

(30) Priority: 09.05.2025 KR 20250060709
(71) Applicant: SAMSUNG SDI CO., LTD., Yongin-si, Gyeonggi-do 17084 (KR)
(72) Inventor: HONG, Youngjae, 17084 Yongin-si, Gyeonggi-do (KR); KIM, Jinhwa, 17084 Yongin-si, Gyeonggi-do (KR); SHIM, Jaeha, 17084 Yongin-si, Gyeonggi-do (KR); KANG, Byungwuk, 17084 Yongin-si, Gyeonggi-do (KR); LEE, Chaewon, 17084 Yongin-si, Gyeonggi-do (KR); KIM, Minhan, 17084 Yongin-si, Gyeonggi-do (KR); LEE, Soonrewl, 17084 Yongin-si, Gyeonggi-do (KR); KIM, Jongmin, 17084 Yongin-si, Gyeonggi-do (KR)
(74) Representative: Bardehle Pagenberg Partnerschaft mbB Patentanwälte Rechtsanwälte

(57) **Abstract**

Some example embodiments include a positive electrode active material, a method of preparing the positive electrode active material, and a rechargeable lithium battery. The positive electrode active material includes a positive electrode active material that includes a first positive electrode active material including a first tungsten-containing lithium nickel-based composite oxide and being in a form of secondary particles in which a plurality of primary particles are agglomerated, and a second positive electrode active material including a second lithium nickel-based composite oxide and being in a form of single particles. An average particle diameter (D₅₀) of secondary particles of the first positive electrode active material is larger than an average particle diameter (D₅₀) of single particles of the second positive electrode active material.

## Description

### BACKGROUND

### 1. Field

A positive electrode active material, a method of preparing the positive electrode active material, and a rechargeable lithium battery are disclosed.

### 2. Description of the Related Art

A portable information device such as a cell phone, a laptop, smart phone, and the like or an electric vehicle uses a rechargeable lithium battery having high energy density and easy portability as a driving power source. Using a rechargeable lithium battery with high energy density as a driving power source or power storage power source for hybrid or electric vehicles may be advantageous.

Various positive electrode active materials have been investigated to realize rechargeable lithium batteries for applications to the above uses. In the recent rapidly increasing demand for high-capacity or high-energy-density rechargeable lithium batteries, developing positive electrode active materials that can increase capacity while ensuring stability and enable operation at high voltages may be advantageous.

### SUMMARY

A positive electrode active material capable of realizing high density, high output, and long cycle-life characteristics, a method for preparing the positive electrode active material, and a rechargeable lithium battery, are described.

In some example embodiments, a positive electrode active material includes a first positive electrode active material including a first tungsten-containing lithium nickel-based composite oxide and being in a form of secondary particles in which a plurality of primary particles are agglomerated, and a second positive electrode active material including a second lithium nickel-based composite oxide and being in a form of single particles. An average particle diameter (D₅₀) of secondary particles of the first positive electrode active material is larger than an average particle diameter (D₅₀) of single particles of the second positive electrode active material. An aspect ratio of the primary particles measured through electron backscatter diffraction in a cross-section of the secondary particles of the first positive electrode active material is in a range of about 1.9 to about 2.5, and an average particle diameter of the primary particles measured through electron backscatter diffraction in a cross-section of the secondary particles of the first positive electrode active material is in a range of about 0.7 µm to about 1.2 µm.

In some example embodiments, a method for preparing a positive electrode active material includes preparing a tungsten-containing nickel-based composite hydroxide, mixing the tungsten-containing nickel-based composite hydroxide and a lithium raw material and performing heat treatment to produce a first positive electrode active material including a first tungsten-containing lithium nickel-based composite oxide and being in a form of secondary particles in which a plurality of primary particles are agglomerated, preparing a second positive electrode active material including a second lithium nickel-based composite oxide, being in a form of single particles, and having an average particle diameter (D₅₀) smaller than an average particle diameter (D₅₀) of the first positive electrode active material, and mixing the first positive electrode active material and the second positive electrode active material together.

In some example embodiments, a rechargeable lithium battery includes a positive electrode including the positive electrode active material, a negative electrode, and an electrolyte.

The positive electrode active material according to some example embodiments improves or maximizes the cycle-life, thereby ensuring long cycle-life characteristics and improving output characteristics. A rechargeable lithium battery to which the positive electrode active material is applied can exhibit high output and implement long cycle-life characteristics.

### BRIEF DESCRIPTION OF THE DRAWINGS

FIG. 1 is a schematic perspective view showing a portion of a cylindrical rechargeable lithium battery cut away.
FIG. 2 is a cross-sectional view schematically illustrating a prismatic rechargeable lithium battery.
FIG. 3 and FIG. 4 are schematic exploded perspective views of pouch-type rechargeable lithium batteries.
FIG. 5 is a TEM image of a cross-section of the secondary particles of the first positive electrode active material according to Comparative Example 1.
FIG. 6 is an image displaying the distribution of tungsten in FIG. 5 through EDS analysis.
FIG. 7 is a TEM image of a cross-section of the secondary particles of the first positive electrode active material according to Comparative Example 1 at a different position from FIG. 5.
FIG. 8 is an image displaying the distribution of tungsten in FIG. 7 through EDS analysis.
FIG. 9 is a TEM image of a cross-section of the secondary particles of the first positive electrode active material according to Example 1.
FIG. 10 is an image displaying the distribution of tungsten in FIG. 9 through EDS analysis.
FIG. 11 is a TEM image of a grain boundary part, which is the boundary between primary particles, in a cross-section of the secondary particles of the first positive electrode active material according to Example 1.
FIG. 12 is an image displaying the distribution of tungsten in FIG. 11 through EDS analysis.

### DETAILED DESCRIPTION

Hereinafter, example embodiments are described in detail so that those of ordinary skill in the art can readily implement them. However, this disclosure may be embodied in many different forms and is not construed as limited to the example embodiments set forth herein.

The terminology used herein is used to describe example embodiments only, and is not intended to limit the present disclosure. The singular expression includes the plural expression unless the context clearly dictates otherwise.

As used herein, "combination thereof" means a mixture, a laminate, a composite, a copolymer, an alloy, a blend, a reaction product, and the like of the constituents.

Herein, it should be understood that terms such as "comprises," "includes," or "have" are intended to designate the presence of an embodied feature, number, step, element, or a combination thereof, but do not preclude the possibility of the presence or addition of one or more other features, number, step, element, or a combination thereof.

In the drawings, the thickness of layers, films, panels, regions, and the like, may be exaggerated for clarity and like reference numerals designate like elements throughout the specification. It is understood that when an element such as a layer, film, region, or substrate is referred to as being "on" another element, the element can be directly on the other element, or intervening elements may also be present. In contrast, when an element is referred to as being "directly on" another element, there are no intervening elements present.

For example, "layer" herein includes not only a shape formed on the whole surface when viewed from a plan view, but also a shape formed on a partial surface.

The average particle diameter may be measured by a method well known to those skilled in the art, for example, by a particle size analyzer, or by a transmission electron microscope image or a scanning electron microscope image. Alternatively, it is possible to obtain an average particle diameter value by measuring using a dynamic light scattering method, performing data analysis, counting the number of particles for each particle size range, and calculating from this. As used herein, when a definition is not otherwise provided, the average particle diameter (D₅₀) may mean the diameter of particles having a cumulative volume of 50 vol% in the particle size distribution. As used herein, when a definition is not otherwise provided, the average particle diameter (D₅₀) means a diameter of particles having a cumulative volume of 50 vol% in the particle size distribution that is obtained by measuring the size (diameter or major axis length) of about 20 particles at random in a scanning electron microscope image.

Herein, "or" is not to be construed as an exclusive meaning, for example, "A or B" is construed to include A, B, A+B, and the like.

"Metal" is interpreted as a concept including ordinary metals, transition metals and metalloids (semi-metals).

When the terms "about" or "substantially" are used in this specification in connection with a numerical value, it is intended that the associated numerical value include a tolerance of ±10% around the stated numerical value. When ranges are specified, the range includes all values therebetween such as increments of 0.1%.

### Positive Electrode Active Material

In some example embodiments, a positive electrode active material includes a first positive electrode active material including a first tungsten-containing lithium nickel-based composite oxide in a form of secondary particles in which a plurality of primary particles are agglomerated, and a second positive electrode active material including a second lithium nickel-based composite oxide in a form of single particles. An average particle diameter (D₅₀) of secondary particles of the first positive electrode active material is larger than an average particle diameter (D₅₀) of single particles of the second positive electrode active material. An aspect ratio of the primary particles measured through electron backscatter diffraction in a cross-section of the secondary particles of the first positive electrode active material is in a range of about 1.9 to about 2.5, and an average particle diameter of the primary particles measured through electron backscatter diffraction in a cross-section of the secondary particles of the first positive electrode active material is in a range of about 0.7 µm to about 1.2 µm.

In the positive electrode including a positive electrode active material including a lithium nickel-based composite oxide, a design has been proposed to improve or maximize capacity and implement long cycle-life characteristics by mixing large and small particles. The positive electrode is generally manufactured by applying and drying a positive electrode composition including a positive electrode active material onto a current collector and then compressing the positive electrode composition. The positive electrode including the large particles and small particles may experience challenges such as the large particles being broken, cracked, or the surface being damaged during the compressing process. Accordingly, repeated charging and discharging of the battery may accelerate the deterioration of the large particles, leading to a problem of reduced cycle-life characteristics. For example, since the ratio of the large particles is generally designed to be higher than the ratio of the small particles for high-density positive electrode design, the characteristics of the large particles greatly affect the characteristics of the positive electrode. At this time, if (when) the primary particles of the large particles is too large, the electrochemically active surface area is reduced, which lowers the efficiency of the positive electrode, and the strain due to volume change during charge and discharge is increased, which has a negative effect on maintaining cycle-life, and if (when) the primary particles of the large particles is too small, there may be a challenge in that the crystallinity may be reduced, which reduces the capacity of the positive electrode.

Accordingly, in some example embodiments, a design is proposed that can improve or maximize the capacity of a rechargeable lithium battery and implement long cycle-life characteristics by increasing the density of the positive electrode active material layer and reducing or suppressing deterioration of the positive electrode by finely controlling the composition, size, and mixing ratio of the positive electrode active material.

A positive electrode active material according to some example embodiments includes a first positive electrode active material and a second positive electrode active material. The first positive electrode active material includes a first tungsten-containing lithium nickel-based composite oxide, and the second positive electrode active material includes a second lithium nickel-based composite oxide. Herein, the average particle diameter (D₅₀) of the first positive electrode active material is larger than the average particle diameter (D₅₀) of the second positive electrode active material, and accordingly, the first positive electrode active material may be expressed as large particles, and the second positive electrode active material may be expressed as small particles.

In some example embodiments, the first tungsten-containing lithium nickel-based composite oxide may be represented by Chemical Formula 1.

Chemical Formula 1: Liₐ₁Niₓ₁M¹_{y1}M²_{z1}W_{w1}O_{2-b1}X_{b1}.

In Chemical Formula 1, 0.9≤a1≤1.8, 0.3≤x1≤1, 0≤y1≤0.7, 0≤z1≤0.7, 0<w1≤ 0.1, 0.9≤x1+y1+z1+w1≤1.1 and 0≤b1≤0.1, M¹ and M² may be different elements and may each independently be or include one or more of Al, B, Ba, Ca, Ce, Co, Cr, Cu, Fe, Mg, Mn, Mo, Nb, Si, Sn, Sr, Ti, V, Y, Zn, and Zr, and X is or includes one or more of F, P, and S.

In Chemical Formula 1, 0.6≤x1≤1, 0≤y1≤0.4, 0≤z1≤0.4 and 0<w1≤0.1; or 0.8≤x1≤1, 0≤y1≤0.2, 0≤z1≤0.2 and 0<w1≤0.1; or 0.9≤x1<1, 0<y1≤0.1, 0≤z1≤0.1 and 0<w1≤0.1.

In some example embodiments, the first tungsten-containing lithium nickel-based composite oxide may be a high-nickel based positive electrode active material in which the content of nickel based on 100 mol% of metals excluding lithium is greater than or equal to about 80 mol%, greater than or equal to about 85 mol%, greater than or equal to about 90 mol%, or greater than or equal to about 91 mol%, and less than or equal to about 99 mol%. The high-nickel based positive electrode active material may implement high capacity and thus may be applied to a high-capacity, high-density rechargeable lithium battery.

In some example embodiments, the content of tungsten based on 100 mol% of metals excluding lithium in the first tungsten-containing lithium nickel-based composite oxide may be in a range of about 0.01 mol% to about 1.0 mol%, for example, about 0.1 mol% to about 1.0 mol%, about 0.01 mol% to about 0.5 mol%, about 0.1 mol% to about 0.5 mol%, about 0.2 mol% to about 0.4 mol%, or about 0.3 mol% to about 0.4 mol%. If (when) the content of tungsten in the first tungsten-containing lithium nickel-based composite oxide is included in the above range, grain growth is reduced or suppressed, and the average particle diameter of the primary particles constituting the secondary particles is reduced, thereby exhibiting desired or improved efficiency.

The first positive electrode active material including the first tungsten-containing lithium nickel-based composite oxide is in the form of secondary particles in which a plurality of primary particles are agglomerated. The secondary particles may be spherical, ellipsoidal, polyhedral, or irregular in shape, and primary particles constituting the secondary particles may be spherical, ellipsoidal, plate-shaped, or a combination thereof.

According to some example embodiments, a concentration of tungsten in the secondary particles of the first positive electrode active material may be uniform, or substantially uniform. That is, tungsten does not have a concentration gradient from the center to the surface direction within the secondary particle of the first positive electrode active material, or the tungsten concentration in the outside is not higher or lower than the inside within the secondary particle of the first positive electrode active material, and tungsten is evenly, or substantially evenly, dispersed within the secondary particle of the first positive electrode active material. That is, the first positive electrode active material may be in the form of secondary particles in which a plurality of primary particles are agglomerated, and the content of tungsten inside the primary particles may be the same or similar regardless of the position of the primary particles. That is, if (when) a primary particle is selected at an arbitrary position in the cross-section of the secondary particle and the content of tungsten inside the primary particle, not at the interface, is measured, the content of tungsten can be expressed as being the same/similar/uniform regardless of the position of the primary particle, e.g., whether the primary particle is closer to the center or the surface of the secondary particle. In such a structure, tungsten by-products or tungsten agglomerates are not generated, so that the capacity, efficiency, and cycle-life characteristics of the positive electrode active material may be simultaneously or contemporaneously improved.

The average particle diameter (D₅₀) of the secondary particles of the first positive electrode active material may be in a range of about 8 µm to about 20 µm, for example about 10 µm to about 18 µm, or about 12 µm to about 16 µm. As for the particle size analysis for the secondary particles of the first positive electrode active material, as an example, LS13320 (Beckmann Coulter) may be used as a particle size analyzer using a laser diffraction method. As particle size analysis conditions, the pump speed may be 55%, ultrasonic dispersion may be performed at 40 KHz for 30 seconds, a run length may be 60 seconds, a refractive index may be 1.6, an e-factor may be 1.00, a sample amount may be 0.20 g, and a dispersant added to the sample may be 1 ml of 10% sodium hexametaphosphate. The D₅₀ refers to the size of particles having a cumulative volume of 50 vol% in the particle size distribution.

In some example embodiments, the average particle diameter of the primary particles constituting the secondary particles of the first positive electrode active material measured through electron backscatter diffraction in a cross-section of the secondary particles of the first positive electrode active material may be in a range of about 0.7 µm to about 1.2 µm, for example about 0.8 µm to about 1.1 µm, about 0.9 µm to about 1.0 µm, or about 0.85 µm to about 0.96 µm. For example, the aspect ratio of the primary particles constituting the secondary particles of the first positive electrode active material measured through electron backscatter diffraction in a cross-section of the secondary particles of the first positive electrode active material may be in a range of about 1.9 to about 2.5, and for example, about 2.0 to about 2.4, about 2.1 to about 2.3, or about 2.18 to about 2.22.

Herein, the average particle diameter and aspect ratio of the primary particles constituting the secondary particles of the first positive electrode active material may be measured through electron backscatter diffraction (EBSD) analysis. The average particle diameter of the primary particles constituting the secondary particles of the first positive electrode active material may mean the average particle diameter of the primary particles measured by EBSD, and may also be expressed as a grain size. The aspect ratio of the primary particles constituting the secondary particles of the first positive electrode active material may mean the aspect ratio of the primary particles measured by EBSD. Through EBSD analysis, the diameter of a circle having the same area as the area of each primary particle present in the cross-section of the secondary particle may be obtained as the grain size, and an arithmetic mean value thereof may be taken as the average particle diameter of the primary particles. For example, through EBSD analysis, the ratio of the longest axis to the shortest axis in the cross-section of each primary particle present in the cross-section of the secondary particle may be obtained, and this ratio may be taken as the aspect ratio of the primary particle. If (when) the average particle diameter and aspect ratio of the primary particles constituting the secondary particles of the first positive electrode active material are included in the above ranges, the electrochemically active surface area may increase and the efficiency of the positive electrode may increase, cycle-life may be maintained by minimizing strain due to volume changes during charging and discharging, and capacity may increase due to high crystallinity.

In some example embodiments, the second lithium nickel-based composite oxide may be represented by Chemical Formula 2.

Chemical Formula 2: Liₐ₂Niₓ₂M³_{y2}M⁴_{z2}O_{2-b2}X_{b2}.

In Chemical Formula 2, 0.9≤a2≤1.8, 0.3≤x2≤1, 0≤y2≤0.7, 0≤z2≤0.7, 0.9≤ x2+y2+z2≤1.1 and 0≤b2≤0.1, M³ and M⁴ may be different elements and may each independently be or include one or more of Al, B, Ba, Ca, Ce, Co, Cr, Cu, Fe, Mg, Mn, Mo, Nb, Si, Sn, Sr, Ti, V, Y, Zn, and Zr, and X may be or include one or more elements among F, P, and S.

In Chemical Formula 2, 0.6≤x1≤1, 0≤y1≤0.4, and 0≤z1≤0.4; or 0.8≤x1≤1, 0≤y1≤0.2, and 0≤z1 ≤0.2; or 0.9≤x1<1, 0<y1≤0.1, and 0≤z1≤0.1.

For example, the second lithium nickel-based composite oxide may be or include a high-nickel based positive electrode active material in which the content of nickel based on 100 mol% of metals excluding lithium is greater than or equal to about 80 mol%, greater than or equal to about 85 mol%, greater than or equal to about 90 mol%, or greater than or equal to about 91 mol%, and less than or equal to about 99 mol%. The high-nickel based positive electrode active material may implement high capacity, and thus may be applied to a high-capacity, high-density rechargeable lithium battery.

The second lithium nickel-based composite oxide may not contain tungsten. For example, based on the total metals excluding lithium in the second lithium nickel-based composite oxide, the content of tungsten may be in a range of about 0 mol% to about 0.001 mol%, or about 0 mol% to about 0.0001 mol%, or about 0 mol%. Tungsten may be included only in the first tungsten-containing lithium nickel-based composite oxide and not in the second lithium nickel-based composite oxide. Accordingly, the initial charge-discharge efficiency and cycle-life characteristics of the rechargeable lithium battery including the positive electrode active material may be simultaneously or contemporaneously improved.

The second positive electrode active material including the second lithium nickel-based composite oxide is in a form of single particles, and the single particles may have a spherical shape, an elliptical spherical shape, a polyhedral shape, or an irregular shape. The single particles may be present alone without a grain boundary within the particle, are composed of one particle, and may be or include a single particle, a monolith structure, a one body structure, or a non-agglomerated particle, in which particles are not agglomerated with each other but exist as an independent phase in terms of morphology, and may be expressed as a single particle (one body particle, single grain), for example, as a single crystal. The single particles may exist alone, or single particles may be agglomerated together. For example, a range of 2 to about 10 single particles may be agglomerated and in contact with each other.

The average particle diameter (D₅₀) of the single particles of the second positive electrode active material may be in a range of about 1 µm to about 8 µm, for example about 1.5 µm to about 7 µm, or about 2 µm to about 6 µm. Particle size analysis of the single particles of the second positive electrode active material may be performed using, for example, a particle size analyzer using laser diffraction, such as LS13320 (Beckmann Coulter). As particle size analysis conditions, the pump speed may be 55%, ultrasonic dispersion may be performed at 40 KHz for 30 seconds, a run length may be 60 seconds, a refractive index may be 1.6, an e-factor may be 1.00, a sample amount may be 0.20 g, and a dispersant added to the sample may be 1 ml of 10% sodium hexametaphosphate. The D₅₀ refers to the size of particles having a cumulative volume of 50 volume% in the particle size distribution.

In some example embodiments, the specific surface area of the positive electrode active material may be in a range of about 0.35 m²/g to about 0.50 m²/g, for example about 0.36 m²/g to about 0.49 m²/g, about 0.37 m²/g to about 0.48 m²/g, or about 0.41 m²/g to about 0.46 m²/g. Herein, the Brunauer-Emmett-Teller (BET) specific surface area may be a BET specific surface area measured by a nitrogen gas adsorption method using a specific surface area measuring device for the total positive electrode active material including the first positive electrode active material and the second positive electrode active material. If (when) the specific surface area of the positive electrode active material is within the above range, there is an advantage in that the electrochemically active surface area increases, thereby increasing the efficiency of the positive electrode.

In some example embodiments, based on a total of 100 wt% of the first positive electrode active material and the second positive electrode active material, the first positive electrode active material may be included in an amount in a range of about 20 wt% to about 80 wt%, for example about 30 wt% to about 70 wt%, about 35 wt% to about 65 wt%, about 40 wt% to about 60 wt%, about 45 wt% to about 75 wt%, about 50 wt% to about 70 wt%, or about 55 wt% to about 65 wt% and the second positive electrode active material may be included in an amount in a range of about 20 wt% to about 80 wt%, for example about 30 wt% to about 70 wt%, about 35 wt% to about 65 wt%, about 40 wt% to about 60 wt%, about 25 wt% to about 55 wt%, about 30 wt% to about 50 wt%, or about 35 wt% to about 45 wt%. If (when) the amount ratio of the first positive electrode active material and the second positive electrode active material is as described above, the positive electrode active material including the same may achieve high capacity, improve the density of the positive electrode active material layer, and exhibit high energy density.

The pellet density of the positive electrode active material may be in a range of about 3.40 g/cc to about 3.50 g/cc, for example about 3.40 g/cc to about 3.47 g/cc. The positive electrode according to some example embodiments may implement a high pellet density, and accordingly can implement high capacity and energy density.

### Method for Preparing Positive Electrode Active Material

In some example embodiments, a method for preparing a positive electrode active material includes preparing a tungsten-containing nickel-based composite hydroxide, mixing the tungsten-containing nickel-based composite hydroxide and a lithium raw material and performing heat treatment to produce a first positive electrode active material including a first tungsten-containing lithium nickel-based composite oxide in a form of secondary particles in which a plurality of primary particles are agglomerated, preparing a second positive electrode active material including a second lithium nickel-based composite oxide, being in a form of single particles, and having an average particle diameter (D₅₀) smaller than an average particle diameter (D₅₀) of the first positive electrode active material, and mixing the first positive electrode active material and the second positive electrode active material.

The method for preparing a positive electrode active material according to some example embodiments includes preparing a first positive electrode active material, which is in the form of large particles, by doping tungsten into a first positive electrode active material precursor, e.g., a large particle precursor, and separately preparing a second positive electrode active material, which is in the form of small particles, and then mixing the first positive electrode active material and the second positive electrode active material together to prepare a positive electrode active material containing tungsten in the large particles alone. The positive electrode active material prepared according to the method for preparing the positive electrode active material has an aspect ratio of the primary particles measured through electron backscatter diffraction (EBSD) in the cross-section of the secondary particle of the first positive electrode active material larger than the aspect ratio of conventional positive electrode active materials, and thus a radial positive electrode active material may be prepared. Meanwhile, by reducing or suppressing grain growth, the average particle diameter of the primary particles measured through electron backscatter diffraction in the cross-section of the secondary particle of the first positive electrode active material is smaller than the average particle diameter of the primary particles of conventional positive electrode active materials, and thus desired or improved efficiency may be exhibited.

In some example embodiments, the tungsten-containing nickel-based composite hydroxide is a first positive electrode active material precursor, and can be prepared through a general co-precipitation method, and may be in a form of secondary particles in which a plurality of primary particles are agglomerated, and the average particle diameter (D₅₀) of the secondary particles may be in a range of about 8 µm to about 20 µm, for example about 10 µm to about 18 µm, or about 12 µm to about 16 µm. If (when) the average particle diameter (D₅₀) of the first positive electrode active material precursor is included in the above range, when the first positive electrode active material is prepared using the first positive electrode active material precursor, a rechargeable lithium battery including the first positive electrode active material may be desired or improved in capacity and cycle-life characteristics.

The tungsten-containing nickel-based composite hydroxide may be represented by Chemical Formula 11.

Chemical Formula 11: Niₓ₁₁M¹¹_{y11}M¹²_{z11}W_{w11}(OH)₂.

In Chemical Formula 11, 0.3≤x11≤1, 0≤y11≤0.7, 0≤z11≤0.7, 0≤w11≤0.1 and 0.9≤x11+y11+z11+w11≤1.1, M¹¹ and M¹² may be different elements and may each independently be or include one or more of Al, B, Ba, Ca, Ce, Co, Cr, Cu, Fe, Mg, Mn, Mo, Nb, Si, Sn, Sr, Ti, V, Y, Zn, and Zr.

In Chemical Formula 11, 0.6≤x11≤1, 0≤y11≤0.4, 0≤z11≤0.4 and 0≤w11≤ 0.1; or 0.8≤x11≤1, 0≤y11≤0.2, 0≤z11≤0.2 and 0≤w11≤0.1; or 0.9≤x11<1, 0<y11≤ 0.1, 0≤z11≤0.1 and 0≤w11≤0.1.

As an example, the first positive electrode active material precursor may be or include a high-nickel based positive electrode active material precursor in which the content of nickel based on 100 mol% of the total metals in the tungsten-containing nickel-based composite hydroxide is greater than or equal to about 80 mol%, greater than or equal to about 85 mol%, greater than or equal to about 90 mol%, or greater than or equal to about 91 mol%, and less than or equal to about 99 mol%.

As an example, the first positive electrode active material precursor may have a content of tungsten in a range of about 0.01 mol% to about 1.0 mol%, for example, about 0.1 mol% to about 1.0 mol%, about 0.01 mol% to about 0.5 mol%, about 0.1 mol% to about 0.5 mol%, or about 0.2 mol% to about 0.4 mol%, based on 100 mol% of total metals in the tungsten-containing nickel-based composite hydroxide.

In some example embodiments, the method includes mixing the tungsten-containing nickel-based composite hydroxide and a lithium raw material, and performing heat treatment to produce a first positive electrode active material including a first tungsten-containing lithium nickel-based composite oxide a form of secondary particles in which a plurality of primary particles are agglomerated.

The tungsten-containing nickel-based composite hydroxide and the lithium raw material may be mixed in a molar ratio of metal in the tungsten-containing nickel-based composite hydroxide to lithium in the lithium raw material in a range of about 1:0.9 to about 1:1.8, and for example, may be mixed in a molar ratio of metal in the tungsten-containing nickel-based composite hydroxide to lithium in the lithium raw material in a range of about 1:0.9 to about 1:1.5 or about 1:1 to about 1:1.2.

The heat treatment may be performed in an oxygen atmosphere, for example, the heat treatment may be performed in a temperature range of about 750 °C to about 950 °C, about 780 °C to about 900 °C, or about 810 °C to about 890 °C, and may be performed for a duration in a range of about 2 hours to about 20 hours, or about 4 hours to about 12 hours.

In some example embodiments, no additional tungsten raw material is added in the step of mixing and performing heat treatment of the tungsten-containing nickel-based composite hydroxide and the lithium raw material.

Through the heat treatment, the first positive electrode active material including the first tungsten-containing lithium nickel-based composite oxide in a form of secondary particles in which a plurality of primary particles are agglomerated may be prepared, and because the first positive electrode active material has been described above, a detailed description thereof is omitted below.

In some example embodiments, in the step of preparing a second positive electrode active material including a second lithium nickel-based composite oxide, in a form of single particles, and having an average particle diameter (D₅₀) smaller than an average particle diameter (D₅₀) of the first positive electrode active material, the second lithium nickel-based composite oxide may be prepared by mixing a nickel-based composite hydroxide and a lithium raw material, and performing heat treatment. Herein, the nickel-based composite hydroxide is a second positive electrode active material precursor.

The nickel-based composite hydroxide may be or include, for example, represented by Chemical Formula 12.

Chemical Formula 12: Niₓ₁₂M¹³_{y12}M¹⁴_{z12}(OH)₂.

In Chemical Formula 12, 0.3≤x12≤1, 0≤y12≤0.7, 0≤z12≤0.7 and 0.9≤ x12+y12+z12≤1.1, and M¹³ and M¹⁴ may be different elements and may each independently be or include one or more of Al, B, Ba, Ca, Ce, Co, Cr, Cu, Fe, Mg, Mn, Mo, Nb, Si, Sn, Sr, Ti, V, Y, Zn, and Zr.

In Chemical Formula 12, 0.6≤x12≤1, 0≤y12≤0.4 and 0≤z12≤0.4; 0.8≤x12≤ 1, 0≤y12≤0.2 and 0≤z12≤0.2; or 0.9≤x12<1, 0<y12≤0.1 and 0≤z12≤0.1.

As an example, the second positive electrode active material precursor may be or include a high-nickel based positive electrode active material precursor in which the content of nickel based on 100 mol% of the total metals in the nickel-based composite hydroxide is greater than or equal to about 80 mol%, greater than or equal to about 85 mol%, greater than or equal to about 90 mol%, or greater than or equal to about 91 mol%, and less than or equal to about 99 mol%.

In some example embodiments, the method includes the step of mixing the nickel-based composite hydroxide and a lithium raw material, and performing heat treatment to produce a second positive electrode active material including a second lithium nickel-based composite oxide, in a form of single particles, and having an average particle diameter (D₅₀) smaller than an average particle diameter (D₅₀) of the first positive electrode active material.

The nickel-based composite hydroxide and the lithium raw material may be mixed in a molar ratio of metal in the nickel-based composite hydroxide to lithium in the lithium raw material in a range of about 1:0.9 to about 1:1.8, and for example, may be mixed in a molar ratio of metal in the nickel-based composite hydroxide to lithium in the lithium raw material of about 1:0.9 to about 1:1.5 or about 1:1 to about 1:1.2.

The heat treatment may be referred to as a first heat treatment, and the first heat treatment may be performed in an oxygen atmosphere, for example, the first heat treatment may be performed in a temperature range of about 750 °C to about 950 °C, about 780 °C to about 900 °C, or about 810 °C to about 890 °C, and may be performed for a duration in a range of about 2 hours to about 20 hours, or about 4 hours to about 12 hours.

A second positive electrode active material in the form of single particles and having an average particle diameter (D₅₀) smaller than the average particle diameter (D₅₀) of the first positive electrode active material may be prepared through a step of pulverizing the material obtained through the first heat treatment to produce a pulverized product, and performing a second heat treatment for the pulverized product.

The pulverizing may include a step of making a product in a small particle form having an average particle diameter (D₅₀) in a range of about 1 µm to about 8 µm after pulverizing by performing pulverizing using a Hosokawa jet mill (Blower 35 Hz, AFG 8000 rpm, Air 4 kgf/cm²).

The second heat treatment may be performed in an oxygen atmosphere, for example, the second heat treatment may be performed in a temperature range of about 600 °C to about 900 °C, about 610 °C to about 800 °C, or about 620 °C to about 700 °C, and may be performed for a duration in a range of about 2 hours to about 20 hours, or about 4 hours to about 18 hours.

Through the second heat treatment, the second positive electrode active material including the second lithium nickel-based composite oxide, in a form of single particles, and having an average particle diameter (D₅₀) smaller than the average particle diameter (D₅₀) of the first positive electrode active material may be prepared, and because the second positive electrode active material has been described above, a detailed description thereof is omitted.

In some example embodiments, the first positive electrode active material and the second positive electrode active material are mixed together. For example, based on a total of 100 wt% of the first positive electrode active material and the second positive electrode active material, the first positive electrode active material may be mixed in an amount in a range of about 45 wt% to about 75 wt%, for example about 50 wt% to about 70 wt%, or about 55 wt% to about 65 wt%, and the second positive electrode active material may be mixed in an amount in a range of about 25 wt% to about 55 wt%, for example about 30 wt% to about 50 wt%, or about 35 wt% to about 45 wt%.

### Positive Electrode

In some example embodiments, a positive electrode includes a current collector and a positive electrode active material layer disposed on the current collector, wherein the positive electrode active material layer includes the aforementioned positive electrode active material. The positive electrode active material layer may further include other types of positive electrode active materials in addition to the aforementioned positive electrode active material. In addition, the positive electrode active material layer may optionally further include a binder, a conductive material, or a combination thereof.

In some example embodiments, a loading level of the positive electrode active material layer may be in a range of about 9 g/cm² to about 14 g/cm², for example about 10 mg/cm² to about 13 mg/cm² or about 11 mg/cm² to about 12 mg/cm². Additionally, a density of the positive electrode active material layer in the compressed final positive electrode may be in a range of about 3.3 g/cc to about 3.8 g/cc, for example about 3.4 g/cc to about 3.7 g/cc or about 3.5 g/cc to about 3.6 g/cc. If (when) applying a positive electrode active material according to some example embodiments, it is advantageous to implement such a loading level and density of positive electrode active material layer, and a positive electrode satisfying the loading level and density of positive electrode active material layer within the above range is suitable for implementing a high-capacity, high-energy-density rechargeable lithium battery.

The loading level refers to a ratio of the weight to the area of the positive electrode active material layer. The loading level may refer to one of the conditions designed during the process of coating the electrode active material slurry to the current collector. For example, the loading level may be calculated as a ratio of a weight to a horizontal sectional area of the electrode active material layer when the electrode slurry is coated on the current collector before drying and compressing the electrode plate.

The density of the positive electrode active material layer means the ratio of the weight to the volume of the positive electrode active material layer in the compressed positive electrode. The density of the positive electrode active material layer may be obtained by measuring a horizontal sectional area, thickness, and weight of the positive electrode active material layer excluding the positive electrode current collector, calculating the volume by multiplying the cross-sectional area and thickness, and dividing the weight by the volume.

A thickness of the positive electrode active material layer may be in a range of about 5 µm to about 300 µm, for example, about 5 µm to about 200 µm, or about 10 µm to about 150 µm. If (when) the thickness of the positive electrode active material layer satisfies the above range, a high-capacity and high-energy density battery may be implemented. The thickness of the positive electrode active material layer may be measured through a scanning electron microscope for a cross-section of the positive electrode.

### Binder

The binder improves binding properties of positive electrode active material particles with one another and with a current collector. Examples of the binder may include at least one of polyvinyl alcohol, carboxymethyl cellulose, hydroxypropyl cellulose, diacetyl cellulose, polyvinyl chloride, carboxylated polyvinyl chloride, polyvinyl fluoride, an ethylene oxide-containing polymer, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, and nylon, but are not limited thereto.

### Conductive Material

The conductive material is included to provide electrode conductivity, and any electrically conductive material may be used as a conductive material unless the electrically conductive material causes an adverse chemical change in the battery. Examples of the conductive material may include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

The amount of each of the binder and the conductive material may independently be in a range of about 0.5 wt% to about 5 wt% based on 100 wt% of the positive electrode active material layer.

The positive electrode current collector may include Al thin film, but the positive electrode current collector is not limited thereto.

### Rechargeable Lithium Battery

Some example embodiments include a rechargeable lithium battery including the aforementioned positive electrode, negative electrode, and electrolyte. As an example, the rechargeable lithium battery may include a positive electrode, a negative electrode, a separator between the positive electrode and the negative electrode, and an electrolyte solution.

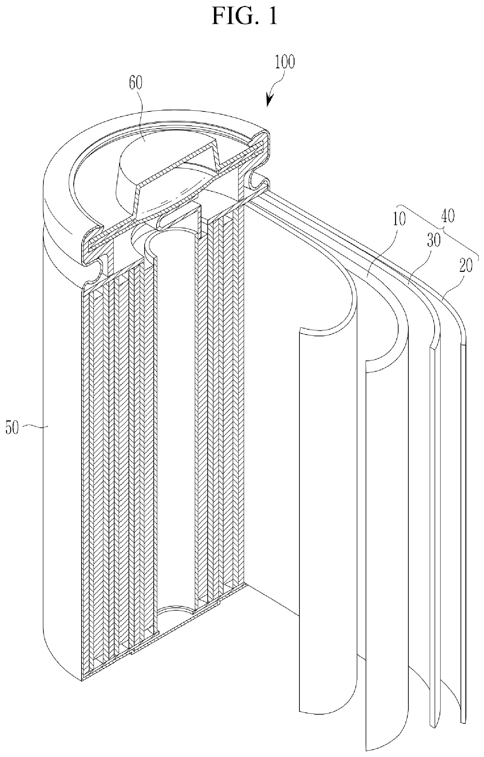

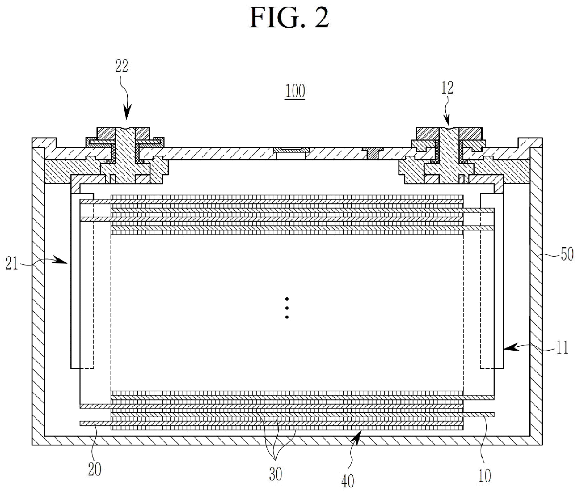

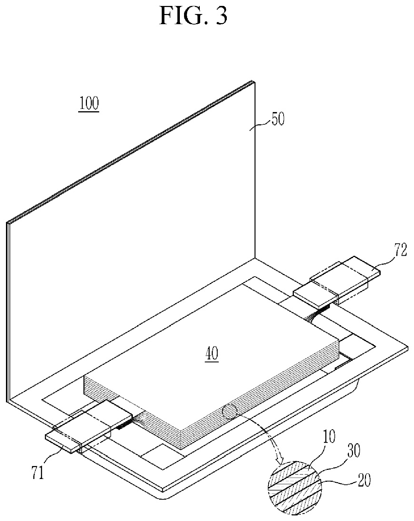

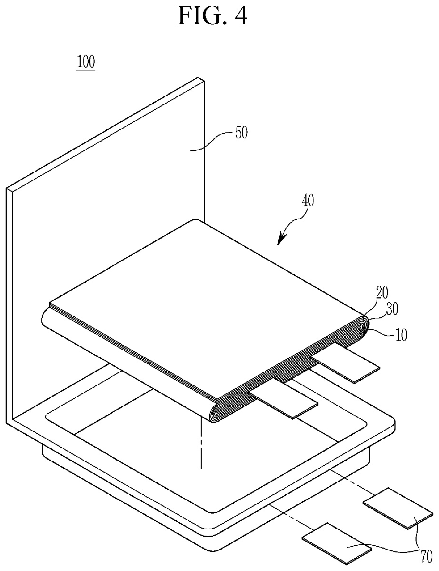

The rechargeable lithium battery may be classified into cylindrical, prismatic, pouch-shaped, coin-shaped, and the like, depending on the shape thereof. FIG. 1 to FIG. 4 are schematic views showing the rechargeable lithium battery according to some example embodiments, where FIG. 1 is a cylindrical battery, FIG. 2 is a prismatic battery, and FIG. 3 and FIG. 4 are pouch-shaped batteries. Referring to FIG. 1 to FIG. 4, the rechargeable lithium battery 100 includes an electrode assembly 40 with a separator 30 interposed between the positive electrode 10 and the negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 that seals the case 50 as shown in FIG. 1. In FIG. 2, the rechargeable lithium battery 100 may include a positive electrode lead tab 11, a positive electrode terminal 12 connected to the positive electrode lead tab 11, a negative electrode lead tab 21, and a negative electrode terminal 22 connected to the negative electrode lead tab 21. As shown in FIG. 3 and FIG. 4, the rechargeable lithium battery 100 includes an electrode tab 70 illustrated in FIG. 4, or a positive electrode tab 71 and a negative electrode tab 72 illustrated in FIG. 3, the electrode tabs 70/71/72 forming an electrical path for inducing the current formed in the electrode assembly 40 to the outside of the rechargeable lithium battery 100.

### Negative Electrode

The negative electrode may include a current collector and a negative electrode active material layer on the current collector, and the negative electrode active material layer includes a negative electrode active material, and may further include a binder, a conductive material, or a combination thereof.

### Negative Electrode Active Material

The negative electrode active material includes at least one of a material capable of reversibly intercalating/deintercalating lithium ions, lithium metal, an alloy of lithium metal, a material capable of doping and dedoping lithium, or a transition metal oxide.

The material capable of reversibly intercalating/deintercalating the lithium ions may be or include a carbon-based negative electrode active material, for example, crystalline carbon, amorphous carbon, or a combination thereof. The crystalline carbon may be irregular, or sheet, flake, spherical, or fiber shaped natural graphite or artificial graphite. The amorphous carbon may be or include at least one of a soft carbon, a hard carbon, a mesophase pitch carbonization product, calcined coke, and the like.

The alloy of lithium metal includes an alloy of lithium and a metal such as or including at least one of Na, K, Rb, Cs, Fr, Be, Mg, Ca, Sr, Si, Sb, Pb, In, Zn, Ba, Ra, Ge, Al, and Sn.

As the material capable of doping and dedoping the lithium, a Si-based negative electrode active material or a Sn-based negative electrode active material may be used. The Si-based negative electrode active material may be or include at least one of silicon, a silicon-carbon composite, SiOₓ (0<x≤2), a Si-Q alloy (wherein Q is or includes at least one of an alkali metal, an alkaline-earth metal, a Group 13 element, a Group 14 element (excluding Si), a Group 15 element, a Group 16 element, a transition metal, a rare earth element, or a combination thereof, for example, at least one of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Tl, Ge, P, As, Sb, Bi, S, Se, Te, Po, and a combination thereof), or a combination thereof. The Sn-based negative electrode active material may include at least one of Sn, SnO₂, a Sn alloy, or a combination thereof.

The silicon-carbon composite may be or include a composite of silicon and amorphous carbon. An average particle diameter (D₅₀) of the silicon-carbon composite particles may be, for example, in a range of about 0.5 µm to about 20 µm. According to some example embodiments, the silicon-carbon composite may be in the form of silicon particles and amorphous carbon coated on the surface of the silicon particles. For example, the silicon-carbon composite may include a secondary particle (core) in which silicon primary particles are assembled, and an amorphous carbon coating layer (shell) on the surface of the secondary particle. The amorphous carbon may also be present between the silicon primary particles, for example, the silicon primary particles may be coated with amorphous carbon. The secondary particles may be dispersed in an amorphous carbon matrix.

The silicon-carbon composite may further include crystalline carbon. For example, the silicon-carbon composite may include a core including crystalline carbon and silicon particles, and an amorphous carbon coating layer on the surface of the core. The crystalline carbon may be or include artificial graphite, natural graphite, or a combination thereof. The amorphous carbon may include at least one of soft carbon or hard carbon, a mesophase pitch carbonized product, and calcined coke.

When the silicon-carbon composite includes silicon and amorphous carbon, an amount of silicon may be in a range of about 10 wt% to about 50 wt%, and an amount of amorphous carbon may be in a range of about 50 wt% to about 90 wt% based on 100 wt% of the silicon-carbon composite. For example, when the composite includes silicon, amorphous carbon, and crystalline carbon, an amount of silicon may be in a range of about 10 wt% to about 50 wt%, an amount of crystalline carbon may be in a range of about 10 wt% to about 70 wt%, and an amount of amorphous carbon may be in a range of about 20 wt% to about 40 wt% based on 100 wt% of the silicon-carbon composite.

For example, a thickness of the amorphous carbon coating layer may be in a range of about 5 nm to about 100 nm. An average particle diameter (D₅₀) of the silicon particles (primary particles) may be in a range of about 10 nm to about 1 µm, or about 10 nm to about 200 nm. The silicon particles may be present as silicon alone, in the form of a silicon alloy, or in an oxidized form. The oxidized form of silicon may be represented by SiOₓ (0<x≤2). For example, the atomic content ratio of Si:O, which indicates a degree of oxidation, may be in a range of about 99:1 to about 33:67. As used herein, when a definition is not otherwise provided, an average particle diameter (D₅₀) indicates a diameter of particle where a cumulative volume is about 50 vol% in a particle size distribution.

The Si-based negative electrode active material or Sn-based negative electrode active material may be used in a mixture with a carbon-based negative electrode active material. When using a mixture of a Si-based negative electrode active material or a Sn-based negative electrode active material and a carbon-based negative electrode active material, the mixing ratio may be in a range of about 1:99 to about 90:10 by weight.

### Binder

The binder adheres the negative electrode active material particles to each other, and also adheres the negative electrode active material to the current collector. The binder may be or include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include at least one of a styrene-butadiene rubber, a (meth)acrylated styrene-butadiene rubber, a (meth)acrylonitrile-butadiene rubber, a (meth)acrylic rubber, a butyl rubber, a fluorine rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, or a combination thereof.

When an aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be mixed and used. The alkali metal may be or include at least one of Na, K, or Li.

The dry binder may be or include a polymer material capable of becoming fiber, and may be or include, for example, at least one of polytetrafluoroethylene, polyvinylidene fluoride, a polyvinylidene fluoride-hexafluoropropylene copolymer, polyethylene oxide, or a combination thereof.

### Conductive Material

The conductive material is included to provide electrode conductivity, and any electrically conductive material may be used as a conductive material unless the electrically conductive material causes a chemical change. Examples of the conductive material include a carbon-based material such as at least one of natural graphite, artificial graphite, carbon black, acetylene black, Ketjen black, a carbon fiber, a carbon nanofiber, a carbon nanotube, and the like; a metal-based material of a metal powder or a metal fiber including at least one of copper, nickel, aluminum, silver, and the like; a conductive polymer such as a polyphenylene derivative; or a mixture thereof.

An amount of the negative electrode active material may be in a range of about 95 wt% to about 99.5 wt% based on 100 wt% of the negative electrode active material layer, and an amount of the binder may be in a range of about 0.5 wt% to about 5 wt% based on 100 wt% of the negative electrode active material layer. For example, the negative electrode active material layer may include a range of about 90 wt% to about 99 wt% of the negative electrode active material, a range of about 0.5 wt% to about 5 wt% of the binder, and a range of about 0.5 wt% to about 5 wt% of the conductive material.

### Current Collector

The current collector may include, for example, at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil, a sheet, or a foam. A thickness of the negative electrode current collector may be, for example, in a range of about 1 µm to about 20 µm, about 5 µm to about 15 µm, or about 7 µm to about 10 µm.

### Electrolyte

For example, the electrolyte for a rechargeable lithium battery may be or include an electrolyte solution, which may include a non-aqueous organic solvent and a lithium salt.

The non-aqueous organic solvent constitutes a medium for transmitting ions taking part in the electrochemical reaction of a battery. The non-aqueous organic solvent may be or include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and the like. The ester-based solvent may include at least one of methyl acetate, ethyl acetate, n-propyl acetate, t-butyl acetate, methyl propionate, ethyl propionate, decanolide, mevalonolactone, valerolactone, caprolactone, and the like. The ether-based solvent may include at least one of dibutyl ether, tetraglyme, diglyme, dimethoxyethane, 2-methyltetrahydrofuran, 2,5-dimethyltetrahydrofuran, tetrahydrofuran, and the like. For example, the ketone-based solvent may include cyclohexanone, and the like. The alcohol-based solvent may include ethanol, isopropyl alcohol, and the like. The aprotic solvent may include at least one of nitriles such as R-CN (wherein R is a C2 to C20 linear, branched, or cyclic hydrocarbon group, and may include a double bond, an aromatic ring, or an ether group, and the like); amides such as dimethylformamide; dioxolanes such as 1,3-dioxolane, 1,4-dioxolane, and the like; sulfolanes, and the like.

The non-aqueous organic solvent can be used alone, or in a mixture of two or more types of solvents, and when two or more types of solvents are used in a mixture, a mixing ratio can be appropriately adjusted according to the desired battery performance, which is widely known to those working in the field.

When using a carbonate-based solvent, a cyclic carbonate and a chain carbonate may be mixed together, and the cyclic carbonate and the chain carbonate may be mixed in a volume ratio in a range of about 1:1 to about 1:9.

The non-aqueous organic solvent may further include an aromatic hydrocarbon-based organic solvent. For example, a carbonate-based solvent and an aromatic hydrocarbon-based organic solvent may be mixed together in a volume ratio in a range of about 1:1 to about 30:1.

The electrolyte may further include at least one of vinylethylene carbonate, vinylene carbonate, or an ethylene carbonate-based compound to improve battery cycle-life.

Examples of the ethylene carbonate-based compound may include at least one of fluoroethylene carbonate, difluoroethylene carbonate, chloroethylene carbonate, dichloroethylene carbonate, bromoethylene carbonate, dibromoethylene carbonate, nitroethylene carbonate, and cyanoethylene carbonate.

The lithium salt dissolves in the organic solvent supplies lithium ions in a battery, enables a basic operation of a rechargeable lithium battery, and improves transportation of the lithium ions between positive and negative electrodes. Examples of the lithium salt may include at least one of LiPF₆, LiBF₄, LiSbF₆, LiAsF₆, LiClO₄, LiAlO₂, LiAlCl₄, LiPO₂F₂, LiCl, Lil, LiN(SO₂C₂F₅)₂, Li(FSO₂)₂N (lithium bis(fluorosulfonyl) imide; LiFSI), LiC₄F₉SO₃, LiN(CₓF₂ₓ₊₁SO₂)(C_{y}F_{2y+1}SO₂) (wherein x and y are integers in a range of 1 to 20), lithium trifluoromethane sulfonate, lithium tetrafluoroethane sulfonate, lithium difluorobis(oxalato) phosphate (LiDFBOP), and lithium bis(oxalato) borate (LiBOB).

A concentration of lithium salt may be within the range of about 0.1 M to about 2.0 M. When the concentration of lithium salt is within the above range, the electrolyte solution has appropriate ionic conductivity and viscosity, and thus desired or improved performance can be achieved and lithium ions can move effectively.

### Separator

Depending on the type of the rechargeable lithium battery, a separator may be present between the positive electrode and the negative electrode. The separator may include at least one of polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may be or include a polymer film formed of or including any one polymer such as at least one of polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, polytetrafluoroethylene (TEFLON), or a copolymer or a mixture of two or more thereof. The porous substrate may include glass fibers, or may comprise a composite membrane of polymer and glass fibers.

The porous substrate may have a thickness in a range of about 1 µm to about 40 µm, for example, about 1 µm to about 30 µm, about 1 µm to about 20 µm, about 5 µm to about 15 µm, or about 10 µm to about 15 µm.

The organic material may include a (meth)acrylic copolymer including a first structural unit derived from (meth)acrylamide, and a second structural unit including at least one of a structural unit derived from (meth)acrylic acid or (meth)acrylate, and a structural unit derived from (meth)acrylamidosulfonic acid or a salt thereof.

The inorganic material may include inorganic particles such as or including at least one of Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but is not limited thereto. An average particle diameter (D₅₀) of the inorganic particles may be in a range of about 1 nm to about 2000 nm, for example, about 100 nm to about 1000 nm, or about 100 nm to about 700 nm.

The organic material and the inorganic material may be mixed in one coating layer, or a coating layer including an organic material and a coating layer including an inorganic material may be stacked together.

The thickness of the coating layer may be in a range of about 0.5 µm to about 20 µm, for example, about 1 µm to about 10 µm, or about 1 µm to about 5 µm.

Hereinafter, examples and comparative examples are described. However, the following examples are only examples of the present disclosure, and the present disclosure is not limited to the following examples.

### Example 1

### 1. Preparation of Positive Electrode Active Material

NiSO₄·6H₂O, CoSO₄·7H₂O, MnSO₄·H₂O, and ammonium metatungstate ((NH₄)₆[H₂W₁₂O₄₀]·nH₂O) were dissolved in distilled water to prepare a mixed metal raw material solution such that the molar ratio of Ni:Co:Mn:W = 92.7:4:3:0.3. To form a complex compound, aqueous ammonia (NH₄OH) as a complexing agent and sodium hydroxide (NaOH) as a pH adjusting agent were prepared. The concentration of the aqueous ammonia was 0.5 M, and the concentration of the sodium hydroxide was 32 wt%. Thereafter, the mixed metal raw material, the aqueous ammonia, and the sodium hydroxide were each introduced into a reactor. Sodium hydroxide was added to maintain the pH inside the reactor. After reacting the mixture for about 24 hours while stirring, the supply of the mixed metal raw material solution was stopped. The solution in the reactor was filtered and washed with high-purity distilled water, and then dried in a hot air oven at 200°C for 24 hours to obtain a first nickel-based metal precursor (Ni_{0.927}Co_{0.04}Mn_{0.03}W_{0.003}(OH)₂). The first nickel-based metal precursor is a secondary particle which is an aggregate of primary particles, and the average particle diameter of the secondary particle is about 16 µm.

Ni_{0.927}Co_{0.04}Mn_{0.03}W_{0.003}(OH)₂ and LiOH were mixed to have a molar ratio of (Ni+Co+Mn+W):Li = 1:1 and then heat-treated at 760 °C for 12 hours under an oxygen atmosphere to prepare a first positive electrode active material containing a first lithium nickel-based composite oxide having a composition of LiNi_{0.927}Co_{0.04}Mn_{0.03}W_{0.003}O₂ in the form of secondary particles having an average particle diameter (D₅₀) of 16 µm.

Subsequently, NiSO₄·6H₂O, CoSO₄·7H₂O, and MnSO₄·H₂O were dissolved in distilled water to prepare a mixed metal raw material solution such that the molar ratio of Ni:Co:Mn = 95:4:1. To form a complex compound, aqueous ammonia (NH₄OH) as a complexing agent and sodium hydroxide (NaOH) as a pH adjusting agent were prepared. The concentration of the aqueous ammonia was 0.5 M, and the concentration of the sodium hydroxide was 32 wt%. Thereafter, the mixed metal raw material, the aqueous ammonia, and the sodium hydroxide were each introduced into a reactor. Sodium hydroxide was added to maintain the pH inside the reactor. After reacting the mixture for about 8 hours while stirring, the supply of the mixed metal raw material solution was stopped. The solution in the reactor was filtered and washed with high-purity distilled water, and then dried in a hot air oven at 200°C for 24 hours to obtain a second nickel-based metal precursor (Ni_{0.95}Co_{0.04}Mn_{0.01}(OH)₂). The second nickel-based metal precursor is a secondary particle which is an aggregate of primary particles, and the average particle diameter of the secondary particle is about 3 µm.

Ni_{0.95}Co_{0.04}Mn_{0.01}(OH)₂ and LiOH were mixed to have a molar ratio of (Ni+Co+Mn):Li = 1:1 and then heat-treated at 810 °C for 12 hours under an oxygen atmosphere to prepare a second positive electrode active material containing a second lithium nickel-based composite oxide having a composition of LiNi_{0.95}Co_{0.04}Mn_{0.01}O₂ in the form of single particles having an average particle diameter (D₅₀) of 3 µm.

The first positive electrode active material and the second positive electrode active material were mixed in a weight ratio of 60:40 to prepare a positive electrode active material.

### 2. Manufacturing of Rechargeable Lithium Battery Cell

98.5 wt% of the prepared positive electrode active material, 1.0 wt% of a polyvinylidene fluoride binder, and 0.5 wt% of a carbon nanotube conductive material were mixed in an N-methyl-2-pyrrolidone (NMP) solvent to prepare a positive electrode active material layer slurry, which was coated on an aluminum foil current collector and then dried and compressed to manufacture a positive electrode.

A negative electrode active material layer slurry was prepared by mixing 97.5 wt% of a graphite negative electrode active material, 1.5 wt% of carboxymethyl cellulose, and 1 wt% of styrene butadiene rubber in a water solvent. The negative electrode active material layer slurry was coated on a copper foil current collector and then dried and compressed to manufacture a negative electrode.

The positive and the negative electrodes were used with a polytetrafluoroethylene separator and an electrolyte solution, which was prepared by mixing ethylene carbonate and dimethyl carbonate in a volume ratio of 3:7 and dissolving 1 M LiPF₆ in the mixed solvent, to manufacture a rechargeable lithium battery cell in a conventional method.

### Example 2

The first nickel-based metal precursor (Ni_{0.926}Co_{0.04}Mn_{0.03}W_{0.004}(OH)₂) was obtained in substantially the same manner as in Example 1, except that, in preparing the mixed metal raw material solution for producing the first nickel-based metal precursor, the molar ratio was adjusted to Ni:Co:Mn:W = 92.6:4:3:0.4.

Ni_{0.926}Co_{0.04}Mn_{0.03}W_{0.004}(OH)₂ and LiOH were mixed to have a molar ratio of (Ni+Co+Mn+W):Li = 1:1 and then heat-treated at 760 °C for 12 hours under an oxygen atmosphere to prepare a first positive electrode active material containing a first lithium nickel-based composite oxide having a composition of LiNi_{0.926}Co_{0.04}Mn_{0.03}W_{0.004}O₂ in the form of secondary particles having an average particle diameter (D₅₀) of 16 µm.

Subsequently, after preparing the same second positive electrode active material as prepared in Example 1, the first positive electrode active material and the second positive electrode active material were mixed in a weight ratio of 60:40 to prepare a positive electrode active material. Then a rechargeable lithium battery cell was manufactured substantially in the same manner as in Example 1.

### Example 3

Ni_{0.927}Co_{0.04}Mn_{0.03}W_{0.003}(OH)₂ and LiOH were mixed to have a molar ratio of (Ni+Co+Mn+W):Li = 1:1 and then heat-treated at 760 °C for 12 hours under an oxygen atmosphere to prepare a first positive electrode active material containing a first lithium nickel-based composite oxide having a composition of LiNi_{0.927}Co_{0.04}Mn_{0.03}W_{0.003}O₂ in the form of secondary particles having an average particle diameter (D₅₀) of 16 µm.

After preparing the same second positive electrode active material as prepared in Example 1, the first positive electrode active material and the second positive electrode active material were mixed in a weight ratio of 70:30 to prepare a positive electrode active material. Subsequently, a rechargeable lithium battery cell was manufactured substantially in the same manner as in Example 1.

### Comparative Example 1

The first nickel-based metal precursor Ni_{0.93}Co_{0.04}Mn_{0.03}(OH)₂ was obtained in substantially the same manner as in Example 1, except that, in preparing the mixed metal raw material solution for producing the first nickel-based metal precursor, the molar ratio was adjusted to Ni:Co:Mn = 93:4:3 (without mixing ammonium metatungstate).

Ni_{0.93}Co_{0.04}Mn_{0.03}(OH)₂, WO₃, and LiOH were mixed to have a molar ratio of (Ni+Co+Mn):W:Li = 0.997:0.003:1 and then heat-treated at 760 °C for 12 hours under an oxygen atmosphere to prepare a first positive electrode active material containing a first lithium nickel-based composite oxide having a composition of LiNi_{0.927}Co_{0.04}Mn_{0.03}W_{0.003}O₂ in the form of secondary particles having an average particle diameter (D₅₀) of 16 µm.

After preparing the same second positive electrode active material as prepared in Example 1, the first positive electrode active material and the second positive electrode active material were mixed in a weight ratio of 60:40 to prepare a positive electrode active material. Subsequently, a rechargeable lithium battery cell was manufactured substantially in the same manner as in Example 1.

### Comparative Example 2

The same first positive electrode active material as prepared in Example 1 was prepared.

Subsequently, the second nickel-based metal precursor Ni_{0.947}Co_{0.04}Mn_{0.01}W_{0.003}(OH)₂ was obtained in substantially the same manner as in Example 1, except that, in preparing the mixed metal raw material solution for producing the second nickel-based metal precursor, NiSO₄·6H₂O, CoSO₄·7H₂O, MnSO₄·H₂O, and ammonium metatungstate ((NH₄)₆[H₂W₁₂O₄₀]·nH₂O) were mixed to have a molar ratio of Ni:Co:Mn:W = 94.7:4:1:0.3.

Ni_{0.947}Co_{0.04}Mn_{0.01}W_{0.003}(OH)₂ and LiOH were mixed to have a molar ratio of (Ni+Co+Mn+W):Li = 1:1 and then heat-treated at 810 °C for 12 hours under an oxygen atmosphere to prepare a second positive electrode active material containing a lithium nickel-based composite oxide having a composition of LiNi_{0.947}Co_{0.04}Mn_{0.01}W_{0.003}O₂ in the form of single particles having an average particle diameter (D₅₀) of 3 µm.

The first positive electrode active material and the second positive electrode active material were mixed in a weight ratio of 60:40 to prepare a positive electrode active material, which was used to manufacture a rechargeable lithium battery cell substantially in the same manner as in Example 1.

### Comparative Example 3

Ni_{0.93}Co_{0.04}Mn_{0.03}(OH)₂ and LiOH were mixed to have a molar ratio of (Ni+Co+Mn):Li = 1:1 and then heat-treated at 760 °C for 12 hours under an oxygen atmosphere to prepare a first positive electrode active material containing a first lithium nickel-based composite oxide having a composition of LiNi_{0.93}Co_{0.04}Mn_{0.03}O₂ in the form of secondary particles having an average particle diameter (D₅₀) of 16 µm.

After preparing the same second positive electrode active material as prepared in Comparative Example 2, the first positive electrode active material and the second positive electrode active material were mixed in a weight ratio of 60:40 to prepare a positive electrode active material. Subsequently, a rechargeable lithium battery cell was manufactured substantially in the same manner as in Example 1.

### Comparative Example 4

The same first positive electrode active material as prepared in Comparative Example 3 was prepared.

After preparing the same second positive electrode active material as prepared in Example 1, the first positive electrode active material and the second positive electrode active material were mixed in a weight ratio of 60:40 to prepare a positive electrode active material. Subsequently, a rechargeable lithium battery cell was manufactured substantially in the same manner as in Example 1.

### Evaluation Example 1: Tungsten Distribution

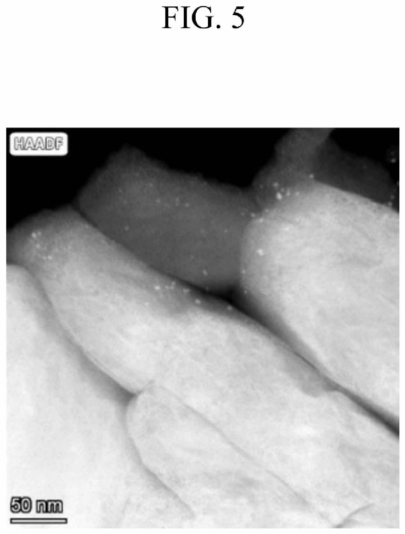

The first positive electrode active materials of Example 1 and Comparative Example 1 were subjected to transmission electron microscopy (TEM) to examine the cross-sections of the secondary particles and energy dispersive spectroscopy (EDS) to examine tungsten distributions, and the results are shown in FIGS. 5 to 12. Herein, the EDS analysis was performed by using Helios G4 HX made by Thermo Fisher Scientific Inc. under conditions of 5 kV and 3.2 nA.

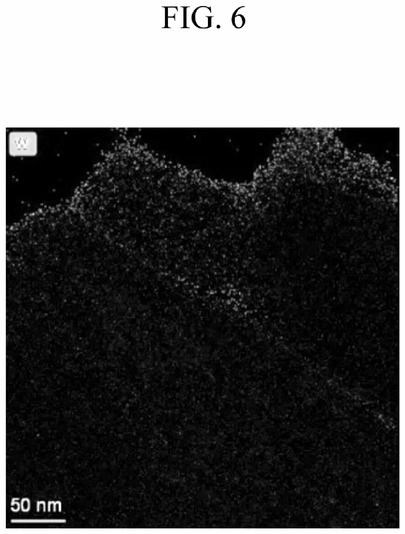

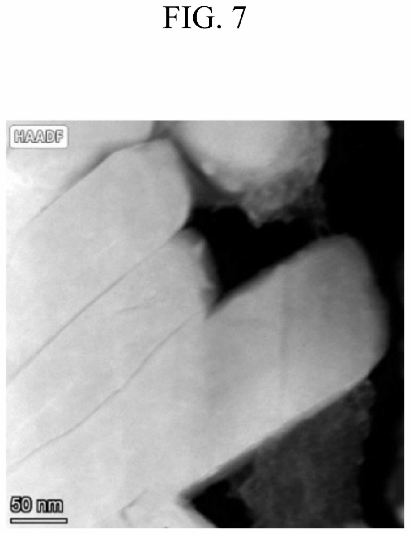

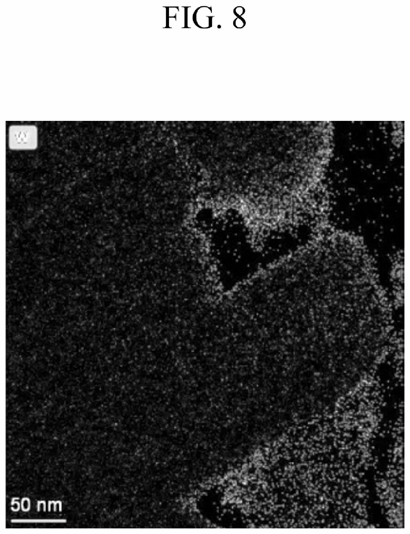

FIG. 5 is a TEM image of a cross-section of the secondary particles of the first positive electrode active material according to Comparative Example 1, and FIG. 6 is an image displaying the tungsten distribution in FIG. 5 through EDS analysis. FIG. 7 is a TEM image of a cross-section of the secondary particles of the first positive electrode active material according to Comparative Example 1 at a different position from FIG. 5, and FIG. 8 is an image displaying the tungsten distribution in FIG. 7 through EDS analysis.

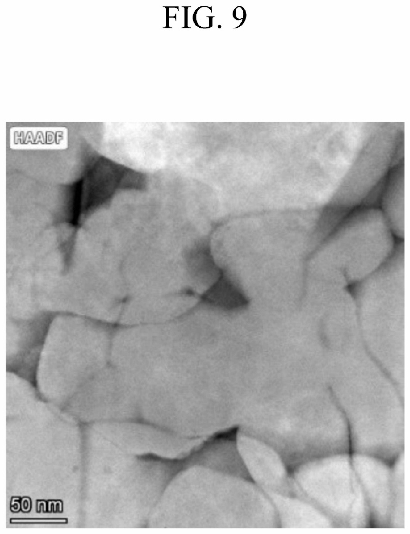

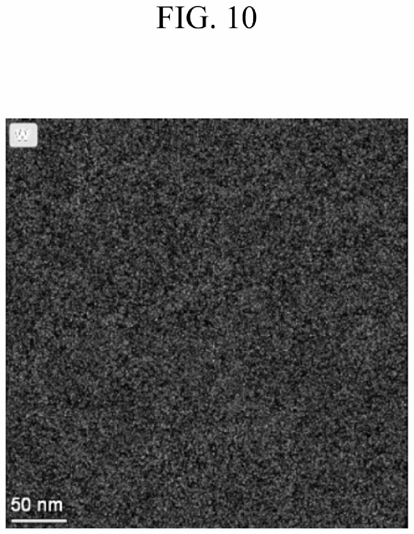

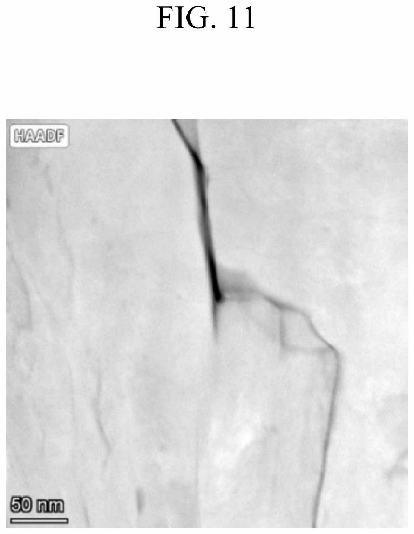

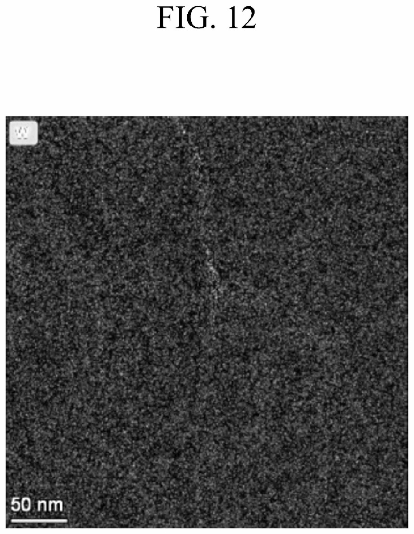

In contrast, FIG. 9 is a TEM image of a cross-section of the secondary particles of the first positive electrode active material according to Example 1, and FIG. 10 is an image displaying the tungsten distribution in FIG. 9 through EDS analysis. FIG. 11 is a TEM image of a grain boundary part, which is a boundary between primary particles in a cross-section of the secondary particles of the first positive electrode active material according to Example 1, and FIG. 12 is an image displaying the tungsten distribution in FIG. 11 through EDS analysis.

Referring to FIGS. 5 to 8, Comparative Example 1, in which a nickel-cobalt-manganese composite hydroxide not doped with tungsten was used as a precursor of the first positive electrode active material, but tungsten was added thereto during the heat treatment, was confirmed to exhibit that the tungsten was densely distributed on the surface of the secondary particles of the first positive electrode active material.

On the contrary, referring to FIGS. 9 to 12, Example 1, which used a nickel-cobalt-manganese composite hydroxide doped with tungsten as a precursor of the first positive electrode active material, exhibited that the tungsten was uniformly distributed internally throughout secondary particles of the first positive electrode active material, which confirmed that the tungsten was evenly doped inside the lithium nickel-based composite oxide.

### Evaluation Example 2: Measurement of Aspect Ratio and Average Particle Diameter of Primary Particles in Cross-section of Secondary Particles of the First Positive Electrode Active Material

The first positive electrode active materials of the Examples and the Comparative Examples were measured with respect to an aspect ratio and average particle diameter of primary particles on the secondary particle cross-section, which were measured through electron backscatter diffraction, and the results are shown in Table 1 below. Herein, in the electron backscatter diffraction (EBSD), the samples were prepared by ion-milling with CP (Cross-sectional Polisher, Ilion+, Gatan, Inc.), and the aspect ratio and the average particle diameter of the primary particles through EBSD were measured by using a QUANTAX e-flash HR EBSD detector, Bruker Corp. under the conditions: an acceleration voltage of 20 keV, a current of 20 nA, a width of 16 µm x a height of 16 µm, measurement magnifications 5,000x, a step size of 25 nm.

### Evaluation Example 3: Pellet Density

The positive electrode active materials according to the Examples and the Comparative Examples were measured with respect to pellet density, and the results are shown in Table 1 below. The pellet density was measured by putting 3 g of each positive electrode active material in a mold (area: 1.298 cm²), inserting a mold bar into a mold main body, and placing the mold set in a hydraulic pressure press to make it into a pellet at a pressure of 3 tons (Metric ton) for 30 seconds.

### Evaluation Example 4: Specific Surface Area

The positive electrode active materials of the Examples and the Comparative Examples were measured with respect to a BET specific surface area, and the results are shown in Table 1 below. The BET specific surface area was, for example, measured by using a specific surface area measuring device, HM model-1208 made by Mountech Co., Ltd., in a nitrogen gas adsorption method. For example, about 0.3 g of each positive electrode active material sample was heated at 300 °C under a nitrogen atmosphere for 1 hour in a preprocessor and additionally, pre-treated at 300 °C for 15 minutes in the specific surface area measuring device and then cooled to a temperature of liquid nitrogen and saturated by adsorption with a gas containing 30% of nitrogen and 70% of He. Subsequently, the samples were heated to room temperature to measure an amount of desorbed gas, which was used to calculate their specific surfaces area in a conventional BET method.

### Evaluation Example 5: Rate Capability

The rechargeable lithium battery cells of the Examples and the Comparative Examples were once charged and discharged at 0.2 C and once charged and discharged at 3 C at 25 °C. Herein, a ratio of 3 C charge capacity to 0.2 C charge capacity was calculated and then shown as rate capability in Table 1 below.

### Evaluation Example 6: Cycle-life Measurement

The rechargeable lithium battery cells of the Examples and the Comparative Examples were 50 times or more charged and discharged at 1.0 C within a voltage range of 3.0 V to 4.3 V at 25 °C to calculate a ratio of 50^{th} cycle discharge capacity to initial discharge capacity, which was shown as cycle-life in Table 1.

**Table 1:**

| | Average particle diameter of the primary particles (µm) | Aspect ratio | Pellet density (g/cc) | Specific surface area (m²/g) | Rate capabili ty (%) | Cycle -life (%) |
|---|---|---|---|---|---|---|
| Ex. 1 | 0.952 | 2.183 | 3.46 | 0.41 | 81.2 | 97.5 |
| Ex. 2 | 0.851 | 2.215 | 3.44 | 0.41 | 81.5 | 96.8 |
| Ex. 3 | 0.952 | 2.183 | 3.40 | 0.46 | 83.0 | 97.2 |
| Comp. Ex. 1 | 1.253 | 1.865 | 3.32 | 0.34 | 73.2 | 95.6 |
| Comp. Ex. 2 | 0.952 | 2.183 | 3.36 | 0.52 | 66.0 | 89.4 |
| Comp. Ex. 3 | 1.452 | 1.632 | 3.21 | 0.32 | 58.9 | 91.8 |
| Comp. Ex. 4 | 1.452 | 1.632 | 3.26 | 0.29 | 53.8 | 93.4 |

Referring to Table 1 above, Examples 1 to 3, compared to Comparative Examples 1 to 4, were confirmed to exhibit both high rate capability and desired or improved cycle-life characteristics. In particular, the positive electrode active material of Example 1 was confirmed to exhibit improved cycle-life characteristics when the primary particles had an average particle diameter of 0.952 µm and an aspect ratio of 2.183.

On the contrary, Comparative Example 1, in which a precursor not doped with tungsten was used as a precursor of the first positive electrode active material, but the tungsten was added thereto during the heat treatment, Comparative Example 2, in which tungsten was doped in both the precursor of the first positive electrode active material and a precursor of the second positive electrode active material, Comparative Example 3, in which tungsten was not doped in the precursor of the first positive electrode active material but in the precursor of the second positive electrode active material, and Comparative Example 4, in which the tungsten was doped in neither the precursor of the first positive electrode active material nor in the precursor of the second positive electrode active material, were all confirmed to exhibit lower rate capability and lower cycle-life characteristics than the examples.

While this disclosure has been described in connection with what is presently considered to be practical example embodiments, it is to be understood that the disclosure is not limited to the disclosed example embodiments. On the contrary, the disclosure is intended to cover various modifications and equivalent arrangements included within the scope of the appended claims.

**Description of Symbols:**

| | | | |
|---|---|---|---|
| 100 | : rechargeable lithium battery | 10: | positive electrode |
| 11: | positive electrode lead tab | 12: | positive electrode terminal |
| 20: | negative electrode | 21: | negative electrode lead tab |
| 22: | negative electrode terminal | 30: | separator |
| 40: | electrode assembly | 50: | case |
| 60: | sealing member | 70: | electrode tab |
| 71: | positive electrode tab | 72: | negative electrode tab |

## Claims

1. A positive electrode active material, comprising:
a first positive electrode active material including a first tungsten-containing lithium nickel-based composite oxide in a form of secondary particles in which a plurality of primary particles are agglomerated; and
a second positive electrode active material including a second lithium nickel-based composite oxide in a form of single particles;
wherein an average particle diameter of secondary particles of the first positive electrode active material is larger than an average particle diameter of single particles of the second positive electrode active material;
an aspect ratio of the primary particles measured through electron backscatter diffraction in a cross-section of the secondary particles of the first positive electrode active material is in a range of 1.9 to 2.5; and
an average particle diameter of the primary particles measured through electron backscatter diffraction in a cross-section of the secondary particles of the first positive electrode active material is in a range of 0.7 µm to 1.2 µm.

2. The positive electrode active material as claimed in claim 1, wherein the first tungsten-containing lithium nickel-based composite oxide is represented by Chemical Formula 1:
Chemical Formula 1: Liₐ₁Niₓ₁M¹_{y1}M²_{z1}W_{w1}O_{2-b1}X_{b1};
wherein:
0.9≤a1≤1.8, 0.3≤x1≤1, 0≤y1≤0.7, 0≤z1≤0.7, 0<w1≤0.1, 0.9≤x1+y1+z1+w1 ≤1.1 and 0≤b1≤0.1;
M¹ and M² are different elements and each independently comprises one or more of Al, B, Ba, Ca, Ce, Co, Cr, Cu, Fe, Mg, Mn, Mo, Nb, Si, Sn, Sr, Ti, V, Y, Zn, and Zr, and
X comprises one or more of F, P, and S.

3. The positive electrode active material as claimed in claim 1 or 2, wherein the average particle diameter of the secondary particles of the first positive electrode active material is in a range of 8 µm to 20 µm, and/or
wherein the average particle diameter of the single particles of the second positive electrode active material is in a range of 1 µm to 8 µm.

4. The positive electrode active material as claimed in any one of claims 1 to 3, wherein a content of nickel based on a total of 100 mol% of metals excluding lithium in the first tungsten-containing lithium nickel-based composite oxide is greater than or equal to 80 mol, and/or
wherein a content of tungsten based on a total of 100 mol% of metals excluding lithium in the first tungsten-containing lithium nickel-based composite oxide is in a range of 0.01 mol% to 1.0 mol%.

5. The positive electrode active material as claimed in any one of claims 1 to 4, wherein the second lithium nickel-based composite oxide is represented by Chemical Formula 2:
Chemical Formula 2: Liₐ₂Niₓ₂M³_{y2}M⁴_{z2}O_{2-b2}X_{b2};
wherein:
0.9≤a2≤1.8, 0.3≤x2≤1, 0≤y2≤0.7, 0≤z2≤0.7, 0.9≤x2+y2+z2≤1.1 and 0≤b2≤ 0.1;
M³ and M⁴ are different elements and each independently comprises one or more of Al, B, Ba, Ca, Ce, Co, Cr, Cu, Fe, Mg, Mn, Mo, Nb, Si, Sn, Sr, Ti, V, Y, Zn, and Zr; and
X comprises one or more of F, P, and S.

6. The positive electrode active material as claimed in any one of claims 1 to 5, wherein a content of nickel based on a total of 100 mol% of metals excluding lithium in the second lithium nickel-based composite oxide is greater than or equal to 80 mol%.

7. The positive electrode active material as claimed in any one of claims 1 to 6, wherein the positive electrode active material comprises a range of 50 wt% to 70 wt% of the first positive electrode active material and a range of 30 wt% to 50 wt% of the second positive electrode active material based on a total of 100 wt% of the first positive electrode active material and the second positive electrode active material.

8. The positive electrode active material as claimed in any one of claims 1 to 7, wherein a BET specific surface area of the positive electrode active material is in a range of 0.35 m²/g to 0.50 m²/g.

9. The positive electrode active material as claimed in any one of claims 1 to 8, wherein a pellet density of the positive electrode active material is in a range of 3.4 g/cc to 3.5 g/cc.

10. A method for preparing a positive electrode active material, the method comprising:
preparing a tungsten-containing nickel-based composite hydroxide;
mixing the tungsten-containing nickel-based composite hydroxide and a lithium raw material and performing heat treatment to produce a first positive electrode active material including a first tungsten-containing lithium nickel-based composite oxide in a form of secondary particles in which a plurality of primary particles are agglomerated;
preparing a second positive electrode active material including a second lithium nickel-based composite oxide, in a form of single particles, and having an average particle diameter smaller than an average particle diameter of the first positive electrode active material; and
mixing the first positive electrode active material and the second positive electrode active material.

11. The method for preparing the positive electrode active material of claim 10, wherein a content of tungsten based on a total of 100 mol% of metals in the tungsten-containing nickel-based composite hydroxide is in a range of 0.01 mol% to 1.0 mol%.

12. The method for preparing the positive electrode active material of claim 10, wherein the heat treatment is performed at a temperature in a range of 750 °C to 950 °C for a duration in a range of 2 hours to 20 hours.

13. The method for preparing the positive electrode active material of claim 10, wherein an aspect ratio of the primary particles measured through electron backscatter diffraction in a cross-section of the secondary particles of the first positive electrode active material is in a range of 1.9 to 2.5.

14. The method for preparing the positive electrode active material of claim 10, wherein an average particle diameter of the primary particles measured through electron backscatter diffraction in a cross-section of the secondary particles of the first positive electrode active material is in a range of 0.7 µm to 1.2 µm.

15. A rechargeable lithium battery (100), comprising:
a positive electrode (10) comprising the positive electrode active material as claimed in any one of claims 1 to 9;
a negative electrode (20); and
an electrolyte.
